# EUROPEAN PATENT SPECIFICATION

(11) **EP 1 625 929 B1**
(45) Date of publication and mention of the grant of the patent: **22.09.2010**
(21) Application number: 05254951.6
(22) Date of filing: 09.08.2005
(51) Int. Cl.: B29C 70/08, B29C 33/10, B29C 51/10, B29C 70/44

(54) **Moulding method**
Formverfahren
Procédé de moulage

(30) Priority: 09.08.2004 GB 0417634
(43) Date of publication of application: 15.02.2006
(73) Proprietor: Gurit (UK) Limited, Newport Isle of Wight P030 5WU (GB)
(72) Inventor: Jones, Daniel Thomas, Cowes Isle of Wright PO31 7AH (GB); Broome, Peter, Emsworth Hampshire, PO10 7SN (GB); Main, Stephen,Patrick, Lockheath-Southampton-S031 6LH (GB)
(74) Representative: Jenkins, Peter David

(56) References cited:
- JP-A- 07 148 848
- US-A- 5 074 770

## Description

The present invention relates to a method of moulding articles comprising a thermoplastic surface material, particularly but not exclusively to a method of moulding of articles of a relatively large size.

Thermoplastic polymers (thermoplastics) are one of the major classes of polymer material. A solid thermoplastic polymer can typically be heated to soften and ultimately melt it, and then cooled to return it to its solid state. These temperature-induced changes are mostly fully-reversible. Thermoplastics can be divided into two broad groups: "amorphous thermoplastics" and "semi-crystalline thermoplastics". In solid amorphous thermoplastics all of the polymer chains are arranged in a random or disordered state; none of the polymer chains are arranged in a crystalline structure. In solid semi-crystalline thermoplastics the structure is mixed: in some portions of the material the polymer chains are arranged in an ordered crystalline structure, and in some portions the chains are in an amorphous state. "Crystalline thermoplastics" have a higher proportion of crystallinity, but still have some amorphous portions. For the purpose of this application, crystalline thermoplastics are grouped with semi-crystalline thermoplastics, and the term "semi-crystalline thermoplastic" will also include "crystalline thermoplastic". In addition, for the purpose of this application "amorphous polymers" or "amorphous thermoplastics" and "semi-crystalline polymers" or "semi-crystalline thermoplastics" refer to types of thermoplastic polymer material, rather than to the local microstructure of any portion of thermoplastic polymer material.

Amorphous thermoplastics are characterised by a glass transition temperature (Tg) above which, with further heating, progressive softening occurs. At temperatures substantially higher than the glass transition temperature, these thermoplastics behave like a high viscosity liquid. The service temperature of amorphous thermoplastics is below their glass transition temperature. They are also as a class generally susceptible to chemical attack and fluid absorption and therefore unsuitable as coating or surfacing materials.

Semi-crystalline thermoplastics have a distinctive melting temperature (Tₘ), above which the material melts and behaves as a liquid. With further increases in temperature, the viscosity falls off quickly. Semi-crystalline thermoplastics also have a characteristic glass transition temperature, often well below the melting temperature, due to their amorphous portions. Whether the semi-crystalline thermoplastic is above or below its glass transition temperature also influences some properties of these thermoplastics. However semi-crystalline thermoplastics can often be used at service temperatures well above their glass transition temperature, because their crystalline portions are very rigid. Typically, semi-crystalline thermoplastics absorb less fluid than amorphous materials and therefore these materials are more suitable as surface materials.

In both amorphous thermoplastics and semi-crystalline thermoplastics, changes induced by heating or cooling are normally fully reversible, unless the decomposition temperature, typically much higher than either the glass transition temperature or the melting temperature, is exceeded.

Thermosetting polymers are a second class of polymer. They polymerise by addition-polymerisation of a resin monomer and a hardener commonly described as the "resin". Prior to curing, the thermoset monomer and hardener are normally in a liquid form, although their viscosities may be very high. Curing may be designed to occur at room temperature or higher temperatures, typically up to 180°. During curing the monomer and hardener react, and the viscosity of the mixture increases until it becomes a cross-linked solid polymer. This change is not reversible. After curing the thermosetting polymer also has a characterised glass transition temperature of typically slightly greater than the recommended curing temperature above which considerable softening of the thermosetting polymer occurs, and the thermosetting polymer behaves like a rubber. Thermosetting polymers or thermoset resins are applied in combination with suitable reinforcement to form a thermoset composite.

One major difference between thermoplastic and thermosetting polymers is that thermoplastics can be melted and resolidified by raising and lowering the temperature, whereas thermosetting polymers cannot.

Semi-crystalline thermoplastic materials are widely used as surface coatings as they have the advantage of being chemically inert, weather resistant, abrasion resistant and generally highly durable. An important problem of thermoplastic materials is that these films cannot be directly applied to thermoset composite structures, since the chemistries of the thermoplastic and the thermoset composites are generally incompatible. This affects the quality of the bond between the thermoplastic and the thermoset structure and this has prevented thermoset surface coatings from being applied to thermoset structures, and in particular of large-size thermoset structures such as wind turbine blades and marine structures.

In addition, in conventional manufacturing techniques bonding problems between the thermoplastic material and the thermoset polymer composite or thermoset structural material result in surface defects. This has prevented thermoplastic materials from being applied to large size composite structures as surfacing materials.

A cosmetic carbon fibre moulded component has been desirable to the composites market for many years. Historically the hurdles to overcome with such a process have been UV stability of the substrate, productivity, elimination of surface defects, surface gloss and depth of gloss. These hurdles have been overcome with limited success by utilising, preimpregnated cloths, moulding at high pressures, and hand finishing with UV resistant lacquers. This approach is both time consuming and costly. In addition, porosity cannot always be removed from the surface, which leads to a great deal of additional work being required such as resin filling and lacquering in order to obtain the required finish.

US 3446686 discloses a process for making a moulded product comprising locating a thermoplastic surface material in relation to a mould whereby the surface material is clamped around the periphery of the mould, heating the surface material to a temperature sufficient to conform the surface material to the mould and drawing a vacuum pressure within the mould to shape the surface material to the mould whilst locating a structural material in relation to the surface material in a moulding relationship to bend the structural material with the surface material to form the moulded product.

In the process as disclosed in US 3446686 a mould comprising an exhaust duct aperture is connected to a vacuum source to draw a vacuum pressure within the mould. As the vacuum pressure is applied, the surface material is drawn onto the mould surface to shape the surface material.

This process has various important disadvantages. The exhaust duct aperture deforms the surface of the moulded product which results in a sink mark. Further away from the exhaust duct the vacuum pressure is reduced which results in surface defects caused by air entrapment at the mould surface, which is exacerbated if heat is required to cure the laminate as this will cause the air to expand. As a result, the surface material is locally detached from the mould surface and an imperfection or "sink mark" will be formed. This problem arises in particular when moulding large-size components as the sheer distance from the exhaust duct prevents adequate removal of air between the surface material and the mould surface.

Another disadvantage is that the process requires a purpose-built mould which accommodates the air extraction duct. These moulds are generally expensive to manufacture. Also due to their complexity, these moulds are unsuitable and uneconomic for manufacturing large parts such as marine structures. Furthermore, the moulded laminate as disclosed in US3446686 is unsuitable to provide a moulded product with the required mechanical and surface properties which are desirable in larger composite parts such as wind turbine blades and marine structures.

US-A-5074770 discloses a vacuum forming/reaction injection moulding method for manufacturing a shaped polymeric laminate article.

JP-A-07148848 discloses a resin moulding method in which a surface of a resin sheet is first press moulded to form a pattern, for example to simulate natural hide, and then the resin sheet is vacuum moulded.

It is an object of the present invention to provide a method, which enables, the manufacture of large size components and which obviate or at least mitigate the above described problems. It is another object to provide a method to manufacture a moulded product comprising an improved cosmetic surface quality, and an improved laminate and/or to provide improvements generally.

According to the present invention, there is provided a method of fabricating a moulded product according to claim 1.

Preferred features are defined in the dependent claims.

In this way, the surface material conforms to the mould surface as the in-mould vacuum pressure is applied. There is no need to provide a mould comprising an air exhaust duct to enable vacuum forming of the surface material. The textured surface provides an air extraction path.

The first mould surface of the mould is closed or impervious to air and therefore a conventional mould can be used to vacuum form a moulded product. An important advantage of the present invention is that, as no purpose built moulds are required for vacuum forming of the moulded products, the cost for manufacturing the moulds is significantly reduced. Vacuum forming or thermoforming can thus be applied to manufacture a wide range of products for which vacuum forming or thermoforming was previously uneconomic or impossible due to the dimensions of the moulded product or the desired properties of the laminate.

In the method of the invention, the thermoplastic surface material is located in relation to the mould such that the surface material forms an air impervious seal over the mould to enable vacuum forming of the surface material upon application of the in-mould vacuum pressure. The surface material may be in contact with the perimeter of the mould and may be held on the perimeter by a clamp mechanism. The clamp mechanism may be by mechanical means, a releasable adhesive to adhere the surface material to the perimeter of the mould, a perimeter vacuum clamp pressure or a combination of these clamping mechanisms to hold the surface material in place.

In particular, the method according to one preferred aspect of the invention is suited to fabricate moulded products comprising a thermoplastic surface layer in combination with structural layers which comprise thermoset composite reinforcement materials comprising a thermoset reinforcement material and a thermoset resin material. These hybrid materials have the important advantage that the thermoplastic surface material provides excellent surface properties and that the thermoset structural laminate provides the desired mechanical properties.

Air evacuation between the surface material and the second mould surface is such that no localised air pockets between the mould surface and the surface material occur and no joint marks or sink marks caused by the air extraction apertures are apparent. This is in contrast to the moulds used to date in vacuum forming or thermoforming which, invariably due to the presence of air extraction apertures in the mould surface, cause positive point defects, whereas poor air extraction and the lack of air extraction cause sink marks and trapped air pockets. This results in a poor surface quality.

A structural material is located in relation to the surface material in a moulding relationship to form a laminate. The structural material may comprise one or more layers of a fibrous reinforcement material and a reinforcement resin material. The fibrous reinforcement material and the resin material may comprise thermoset or thermoplastic materials depending on the desired mechanical properties of the moulded product.

The reinforcement material may comprise varying degrees of impregnation with the resin material. Alternatively, the reinforcement material may be substantially unimpregnated with the resin material whereby the resin material is adhered or tacked to the surface of the reinforcement material (such as a SPRINT (TM) moulding material).

In another embodiment, the reinforcement material is substantially unimpregnated or completely free from resin and the resin is applied to the reinforcement material by means of a resin infusion after the reinforcement material is located in place on the surface material. In particular, the resin may be applied by means of a process similar to SCRIMP (Seemans Composites Resin Infusion Moulding Process, see also US 4902215).

In the infusion process, dry fibrous reinforcement material or at least partially dry fibrous reinforcement material is laid up, a bag is applied over the laminate and the bag is sealed around the mould edge. A resin supply is connected to the bag enclosure and a vacuum pressure is applied within the bag to draw the resin in through the reinforcement layers to impregnate the reinforcement and to consolidate the laminate. During resin infusion, air and gases are extracted from the laminate via the unimpregnated fibrous reinforcement material.

The laminate behind the thermoplastic surface material preferably is configured so as to greatly reduce the occurrence of surface defects to ensure high quality mouldings. Usually if the structural laminate has defects introduced into it, normally by human error, these will result in defects in the surface moulding and require at least rework and in some cases scrapping of the entire moulding. The laminate of the preferred embodiments of the present invention prevents surface defects, even when the composite materials have not been applied in an ideal manner. Faults due to local overlaps in the reinforcement material layers, gaps in the reinforcement and other laminate defects do not affect the cosmetic quality of the surface of the moulded product. The combination of the textured surface and the at least partially unimpregnated structural material enables the removal of trapped air and the filling in and curing of these imperfections with resin during processing, whilst the surface is held against the mould surface to maintain the cosmetic finish.

The present invention can result in a moulded product of a high cosmetic surface quality wherein common surface defects are absent or greatly reduced in comparison to conventional laminates. This aspect is particularly important in the manufacture of large composite structures, in which often imperfections in the laminate are unavoidable due to fabrication time constraints, the thickness of the individual structural layers and the use of (unskilled) manual labour and/or automated fabrication processes.

Notably, drum skinning where the surface material bridges over a void in the backing laminate, and sink marks are largely absent in the moulded products manufactured in accordance with the invention. Drum skinning is a widespread problem in conventional laminate. Often drum skinning faults are missed on first visual examination, but then these faults occur on sanding or cause the surface coating to fail in service.

Another parameter that is critical for the production of fault free mouldings is that the resin content of the laminate is sufficiently high to ensure complete impregnation of the backing laminate to produce a low void content laminate.

Dry reinforcement layer; the first layer of the structural laminate can be used dry i.e. without any resin. The resin requirement for this will come from the adjacent layer of structural layer that will have additional resin content.

Upon locating the structural material in relation to the surface material to form the laminate, a further moulding vacuum pressure in the form of a mould vacuum pressure may be applied to the laminate to bond the structural material with the surface material and to mould the laminate. Preferably, whilst the moulding vacuum pressure is applied, or after application of the moulding vacuum pressure, the laminate is heated to a temperature sufficient to cure the laminate to form the moulded product. The moulding vacuum pressure is applied by any conventional technique such as vacuum bagging, resin flow infusion, autoclaving or closed mould processing.

In another embodiment of the invention, the method comprises the step of locating the structural material in relation to the surface material prior to drawing a vacuum pressure within the mould to shape the surface material to the mould. In this way, the structural material and surface material are shaped concurrently. Preferably, the structural material is in a tensile relaxed condition in a moulding relationship with the surface material. The structural material and the surface material are clamped together around the periphery of the mould. As the structural material is not under tension, the material can conform to the surface of the mould. This is particularly important for thermoset structural materials which are not thermoformable to the mould shape.

We have found that the above technique can be used for structures that are relatively small in shape and for laminates of a limited overall thickness. For larger structures such as marine structures and wind turbine blades which may be from 6 m to in excess of 50 m in length, it is more practicable and advantageous to draw the surface material in the mould first, to lay up the structural reinforcement material and to then consolidate and process the thus formed laminate structure to cure the structure and to form the moulded product.

Before the in-mould vacuum pressure is applied, the surface material may be at a temperature sufficient to conform the surface material to the mould. For some surface materials, room temperature may be sufficient to conform the surface material to the mould. For other surface materials, the material may be heated to the desired temperature to allow vacuum assisted thermoforming.

During processing, to ensure an adequate bond between the surface material and the structural material, the melt temperature of the thermoplastic surface material during processing of the laminate may be higher than the temperature necessary for curing the structural material. Alternatively, the melt temperature of the surface material during processing may be selected such that the melt temperature of the thermoplastic material is lower than the temperature necessary for curing the structural material.

In a preferred embodiment, the surface material comprises a surface layer comprising a thermoplastic, thermoformable surface coating material, and a bonding layer for bonding the surface layer to the structural material. The bonding layer retains bonding ability after the surface material is conformed to the mould to allow subsequent in-mould application of one or more layers of a structural material onto the surface material. The ability of the bonding layer to bond to a subsequently applied or concurrently applied structural material may be retained by controlling the duration and/or intensity of heating of the surface material.

The thermoplastic material may comprise a fluoropolymer material, an acrylic material, a polyurethane material or a combination of any of the aforesaid materials.

The thermoplastic material may be produced on the basis of an extrusion casting process and therefore, it is advantageous that the material is readily melt processable. Melt processable thermoplastic fluoropolymer materials comprise of FEP (fluorinated ethylene propylene),PVF (polyvinylfluoride), EFEP (ethylfluorinatedethylene propylene), PVDF (polyvinylidene fluoride), MFA (multifunctional acrylate), PFA (perfluoroalhoxyathane, PTFE (polytetrafluoroethylene), HTE (trademark of the Minnesota Mining and Manufacturing Co.) or copolymers of these materials with HFP (hexafluoropropylene), or terpolymers of these with PTFE (polytetrafluoroethylene). Acrylic materials may comprise PMMA (polymethylmethacrylate) or PEMA (polyethyl methacrylate). Polyurethane materials may comprise thermoplastic aliphatic polyurethanes. The thermoplastic material may also comprise combinations of the aforesaid materials.

The surface material may comprise pigmentation to provide the correct colour. The material may further comprise UV absorbers to maximise the weathering performance of the film and to ensure that there is no penetration of UV radiation to the underlying epoxy laminate. The surface material is formulated so as to have a good compatibility and bonding ability with the structural reinforcement layers, whilst also retaining good dirt shedding properties, weathering resistance, abrasion resistance and durability and chemical resistance. These properties are important in structures in which maintenance operations are costly, complicated and sometimes hazardous such as offshore structures, wind energy structures and ships.

The surface material is tough and sufficiently resistant to manual handling during the application process to prevent the material from being damaged. The surface material further comprises a low modulus and high elongation at the drawing temperatures to allow the material to conform to the mould surface.

Importantly, the surface material may be welded. This has the advantage that mouldings are not limited to the dimensions of the available film. This is particularly advantageous in the fabrication of large structures such as marine structures and wind turbine blades.

The surface layer may be adapted for direct bonding to the structural material after thermoforming of the surface material. The thermoplastic surface material may comprise a thickness of 50 to 1000 µm.

In a preferred embodiment, the composite material comprises a very light weight reinforcement material comprising a high viscosity, low flow resin system and a layer of a reinforcement material comprising a low resin content. The latter layer is as thin as possible whilst remaining structurally stable, and maintains a good through thickness porosity upon processing. The layers are processed together to form a single component by vacuum assisted processing or other conventional techniques.

When present, amorphous thermoplastic materials of the surface material are joined to thermosetting composites during the curing of the thermosetting composite by encouraging the liquid, uncured components (monomers and hardener) of the thermosetting polymer to migrate into the amorphous thermoplastic before the thermosetting polymer cures, utilising the low solvent resistance of the amorphous thermoplastic. This migration into the amorphous thermoplastic normally occurs below the glass transition temperature of the thermoplastic, at which condition the material is solid. This effectively gives the cured thermosetting composite a thermoplastic surface, with the ability to join a similarly-surfaced material under increased temperature and some joining pressure. To bond a semi-crystalline or crystalline thermoplastic polymer to a thermosetting polymer component, a compatible semi-crystalline thermoplastic polymer and uncured thermosetting polymer components are selected wherein the curing temperature of the uncured thermosetting polymer components is above the melting temperature of the thermoplastic polymer or the curing temperature of the thermosetting polymer components is below or at the melting temperature of the thermoplastic polymer. The thermoplastic polymer is located in contact with the uncured thermosetting polymer component; the thermoplastic polymer and uncured thermosetting polymer or thermosetting polymer composition components are heated to the curing temperature to the thermosetting polymer, where the uncured thermosetting polymer components and the thermoplastic polymer are able to at least partly interpenetrate before the thermosetting polymer cures, and the thermoplastic polymer and cured thermosetting polymer component are cooled such that the thermoplastic polymer is very strongly bonded to the cured thermosetting polymer component.

It will be appreciated that, with the interpenetration between the thermoplastic and thermoset resins, the thermoplastic polymer surface is very strongly bonded to the thermosetting polymer or thermosetting polymer composite. This ensures that the thermoplastic surface cannot be readily removed from the thermosetting polymer or thermosetting polymer composite.

It is appreciated that a cured thermosetting polymer or thermosetting polymer composite with a thermoplastic surface made according to the above aspects of the invention may be bonded to a further section of thermosetting polymer or thermosetting polymer composite by a second curing process conducted in accordance with any of the aspects of the invention as hereinbefore described.

The bond between the thermosetting polymer or thermosetting polymer composite and the thermoplastic surface is such that in a shear stress test according to British Standard 5350 Part C5, values of over 3 MPa are achieved. Also, in the substrate adhesion test according to EN ISO 2409 ("Paints and varnish cross cut test") no surface material becomes detached from the composite laminate.

The invention will now be described by way of example only and with reference to the accompanying drawings, in which:
Figure 1 presents a diagrammatic cross-sectional view of a porous liner not according to the invention;
Figure 2 presents a diagrammatic cross-sectional view of a mould comprising a porous liner and a laminate not according to the invention;
Figure 2a presents a diagrammatic cross-sectional view of a mould comprising a thermoplastic film having a textured surface and a laminate according to an embodiment of the invention;
Figure 3 presents a diagrammatic cross-sectional view of a moulding method using a mould not according to the invention;
Figure 4 presents a diagrammatic cross-sectional view of a surface material, and;
Figure 5 presents a diagrammatic cross sectional view of a laminate of a large-scale component.

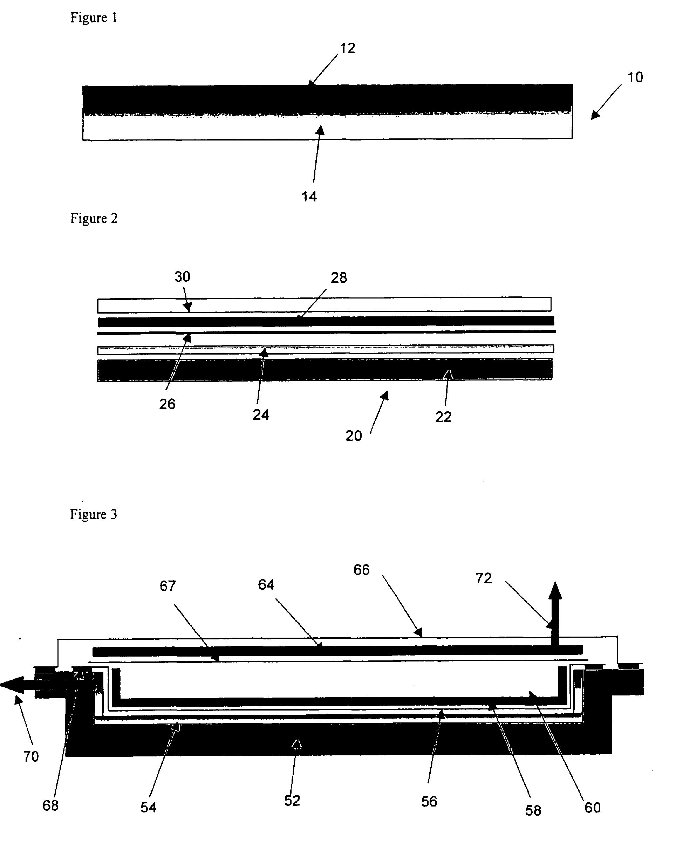

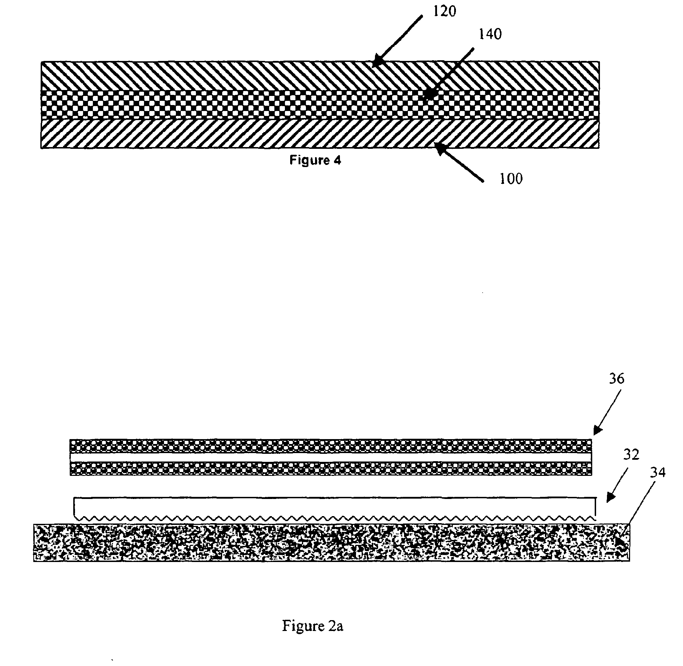

Figures 1 and 2 and Figure 3 do not disclose an apparatus for use in the method of the invention but these Figures and the corresponding description are retained for clarity of description of the embodiment of Figure 2a.

In Figure 1, the porous, air-permeable liner is formed from a preform or prefabricated moulding material 10 comprising a reinforcement material 12 having a very low weight of typically less than 150 g/m² and preferably less than 100 g/m² or even less than 50 g/m². The reinforcement material 12 defines the pore size of the liner. The pore size is selected in relation to the properties of the surface material such that no pores are reproduced on the surface of the moulded product.

The reinforcement material 12 further comprises a resin material comprising a high viscosity during processing (low flow) of typically more than 1000 mPa.s. The resin is a thermoset resin. The high viscosity of the resin controls the pore size of the liner surface.

The preform 10 further comprises a second fibrous reinforcement layer 14. The layer comprises a thickness which enables the reinforcement layer to be structurally stable whilst being as thin as possible. This layer has preferably a thickness of less than 0.5 mm. After processing of the liner, the second layer has a low resin content to ensure that the processed preform has suitable air permeability or porosity properties to enable the product to be applied in relation to a mould as a porous liner. The resin properties are selected to provide structural support to the processed liner so that the liner can be thin and yet stiff so that the thickness of the liner remains stable during vacuum extraction of the air between the surface material and the mould surface.

The fibrous reinforcement material 14 has a weight of less than 500 g/m² and preferably less than 400 g/m². The fibrous reinforcement material 14 can be formed from one or more layers of reinforcement material.

The preform material 10 is processed through to cure on an appropriate mould which has a shape such that the shape of the liner when cured corresponds to the mould surface. Thus, the second mould surface of the liner corresponds to the first mould surface of the mould.

The preform material 10 when processed and cured has a thickness of 0.5 millimetres or less to ensure that appropriate, required dimensions of the moulded product are maintained.

In Figure 2, a mould 20 is presented comprising a closed, non-permeable conventional mould 22 which has a liner 24 in contact with its mould surface. The liner conforms to the mould 22 such that the second mould surface of the liner 24 corresponds to the first mould surface of the mould 22 and is spaced equidistant therefrom. A thermoplastic surface film 26 is located over the mould 20. A low temperature of between approximately 30 to 60 degrees Celsius may be applied to the material to draw the film 26 into high draw areas of the mould surface and to conform the surface material 26 to the mould 20 whilst a vacuum pressure is applied to the air permeable liner 24. In this way, the film 26 is brought in contact with the liner 24 to shape the surface film 26 so that the surface film 26 conforms to the liner surface 24 and hence the original mould surface 22. Whilst the vacuum pressure is applied to the surface film, a structural material 28, 30 is provided on the film to form a laminate.

The film consists of a PVDF material or a PVF material or any other suitable thermoplastic material to provide a suitable coating to the composite structure. The film is drawn into the mould profile by applying an in-mould vacuum pressure to the liner of typically up to 1 bar until the film is in intimate contact with the mould surface.

Once the film 26 is positioned, lamination of the structural laminate can commence by laying up one or more layers of the structural material such as a preimpregnated fibrous reinforcement material (prepreg). Alternative materials may be provided such as SPRINT(TM)-type moulding materials. Also dry reinforcement may be provided which is impregnated by resin infusion or resin transfer moulding (RTM).

In Figure 2, the first layer of the structural material, layer 28, is a fibrous reinforcement layer which is free of resin (unimpregnated) before the material is processed. This ensures that no surface defects can occur on the surface of the moulded product due to air entrapment between the structural material 30, 28 and the surface film 26. The subsequent layers of structural material are processed by applying pressure and, if necessary, heat to consolidate the structural layers and to ensure curing of the laminate and adequate bonding of the surface film 26 to the structural material 28,30.

Figure 2a illustrates an embodiment of the invention. In this embodiment the thermoplastic film is thermoformed into the mould. The thermoplastic film is pre-embossed with a continuous surface texture (32) before application to the mould (34). This textured film is then sealed to the perimeter of the tool and a vacuum applied. The vacuum draws air from between the tool and film and the external air pressure draws the thermoplastic to the tool face, this can be accelerated with the addition of temperature.

One or more layers of a structural material (36) are directly applied onto the film. The structural material layers can comprise an unimpregnated reinforcement layer which is free of any reinforcement resin and/or a preimpregnated fibrous reinforcement layer which is located thereon.

The embossing or texture on the surface of the film allows air to be completely evacuated from the interface of the film and the tool. Various patterns have been assessed for the film surface and it has been found that if the film is given the profile from a continuous filament glass fabric (CFM) this is very effective. This pattern flows out during the thermal cycle used to cure the epoxy prepreg and is not seen in the final part.

The textured surface on the thermoplastic material can be achieved by placing a textured material into the tool, which embosses the thermoplastic film when it is heated and drawn into the tool. The textured sheet is placed into the tool then the thermoplastic film material is then secured to the peripheral flange of the tool using sealant tape or a similar method. By slowly applying heat and vacuum the film can then be drawn into the tool. Care should be taken to warm the thermoplastic material slowly to avoid puncturing the film. With the heat being applied by the hot air gun, the film begins to soften. By continuing to apply heat and increasing the vacuum, the film starts to draw into the tool. As the thermoplastic film is drawn into the tool the texture becomes visible on the film. The film is drawn into the profile of the tool with only the finest detail lacking definition; this is aided by additional heating. Once the film is fully drawn into all areas of the tool the overall texture clearly visible.

Once the film has been allowed to cool such that it retains its shape, it can be removed from the tool in order to repeat the preforming process in preparation for mass production.

The layup is then consolidated by either vacuum pressure or a secondary tool, at this point the temperature is increased above the softening point of the thermoplastic film and the texture flows away forming against the tool face. On demoulding the part now has a smooth surface free of voids and all signs of the original texture.

Figure 3 presents the lay-up, consolidation and curing.of a composite material having a thermoplastic surface film and a thermoset reinforcement structure in more detail.

The mould 52 comprises a closed surface so that the mould 52 is impervious to air. This is similar to conventional moulds which are suitable for use in vacuum bag moulding.

A liner 54 is located in the mould 52. This liner 54 is porous, similar to the liners 54 as described above with reference to Figures 1 and 2. A surface film 56 is clamped on the edges of the mould 52 by means of clamps 68. The film 56 is a thermoplastic material which can be formed to a required shape by raising the temperature.

The liner 54 is in contact with a vacuum source 70 for extracting air out of the mould via the liner which causes the film 56 to be drawn onto the liner 54 and to thereby conform the film 56 to the surface of the mould 52.

Layers of a structural material 58, 60 are directly applied onto the film. The structural material layers comprise an unimpregnated reinforcement layer 58 which is free of any reinforcement resin and a preimpregnated fibrous reinforcement layer 60 which is located thereon.

A standard vacuum consumable pack for composite processing is used which consists of a release film 67 located over the lay-up of structural material, a breather layer 64 and a vacuum bag film 66 sealed on the edge of the mould using standard methods such as tacky tape. The surface film is held in place by vacuum assisted clamps which suck down the edges of the surface film to hold these in place onto the mould. A second vacuum source 72 is provided to extract air from within the vacuum bag 66.

Alternatively, layers of the structural material 58, 60 are located on the surface film 56 after the film is drawn onto the liner 54. The film 67, breather layer 64 and vacuum bag 66 are applied after the structural material layers 58,60 are applied onto the surface film 56.

To form a moulded product, the various layers are located in relation to the mould 52 as described above. To process the laminate, firstly an in-mould vacuum pressure 70 is applied to the liner 54 to draw the surface film 56 onto the liner so that this film conforms to the mould surface. Subsequent to this step, air 72 is extracted from within the envelope of the vacuum bag 66 to compress the layup of structural material onto the surface film 56. This enables the reinforcement fabrics of the structural laminate to be impregnated by the resin. In addition, the temperature of the layup may be raised in order to promote cure of the resin and to enhance the consolidation of the laminate structure.

After curing of the laminate, the vacuum pressures 70, 72 are removed. A reverse pressure or flow of air may be provided to the liner via source 70 to promote release of the moulded product from the mould. After removal of the vacuum pressures, the film 62, breather layer 64 and vacuum bag 66 are removed upon release of clamps 68 and the moulded product can be removed from the mould. The mould is then ready for re-use.

In Figure 4, a semi-crystalline or crystalline thermoplastic layer 100 is bonded to the surface of a thermosetting composite component or thermoset laminate 120 during the curing of the thermosetting component or laminate to form a semi-interpenetrating polymer network 140 by means of a method as hereinbefore described. The thermosetting composite component 120 comprises a structural material. The structural material comprises a fibrous reinforcement material and a reinforcement resin material. Effective bonding is achieved by selecting a semi-crystalline thermoplastic 100 which is compatible with the chosen thermosetting monomers. Determination of suitable material combinations can be made using thermodynamic and solubility criteria.

The selection of compatible materials requires a close matching of several solubility parameters. The "effective solubility parameter" of the semi-crystalline thermoplastic 100 can be altered. This is achieved by bringing the thermoplastic 100 and thermoset monomer/hardener 120 to a sufficiently high temperature.

In general terms, solvents cannot migrate effectively through the solid crystalline portion of polymers, due to insufficient free energy to overcome the heat of fusion of the crystalline portion of the polymer. Through increased temperature of the system, the heat of fusion is overcome. Under these circumstances the monomer and hardener are able to migrate through the polymer, whereas previously the polymer was insoluble. Hence the "effective solubility parameter" of the polymer is altered through the addition of heat.

Therefore one way to provide for rapid formation of a semi-interpenetrating polymer network 140 is to alter the "effective solubility parameters" of the semi-crystalline thermoplastic 100 by curing the thermosetting polymer 120 above the melting temperature of the semi-crystalline thermoplastic 100. However, a second possibility also exists. Through careful matching of the monomer/hardener 120 and thermoplastic solubility properties, and at a suitable temperature, the presence of the thermoset monomer, acting as a solvent, can overcome the heat of fusion of the crystalline polymer, thus lowering the "melt" temperature to an "effective melting temperature" which depends on the monomer/hardener involved. Under these circumstances the monomer and hardener are able to migrate through the polymer below the normal melting temperature. This latter aspect has the important advantage that the thermoplastic material does not melt and thus the cosmetic surface quality of the thermoplastic surface material is not affected by the surface characteristics of the liner.

A semi-crystalline thermoplastic material 100 selected according to the above criteria may be integrated successfully, by the formation of a substantial semi-interpenetrating polymer network (SIPN) 140, onto the surface of a thermosetting polymer or thermosetting polymer composite 120. An aspect of that process is the selection of a thermosetting polymer and a thermoplastic with a solubility determined by the use of Hansen parameters which take account of dispersion, polar and hydrogen bonding forces, and the selection of a curing temperature/time cycle such that the thermosetting monomer and hardener are able to migrate sufficiently into the molten semi-crystalline polymer, or into the crystalline component of the thermoplastic polymer by overcoming the heat of fusion of the crystalline component (see AFM Barton, CRC Handbook of Solubility Parameters and Other Cohesion Parameters, CRC Press, Boca Raton, 1983 for details on Hansen parameters).

During processing the crystalline portion of the thermoplastic polymer in contact with the monomer and hardener "melts", allowing rapid discrete mixing of the uncured thermosetting resin and thermoplastic resin.

Following cure of the component, the thermoplastic film 100 is intimately bonded to the component 120 through the entanglement of molecular chains in the region of the original surfaces thereby forming a semi-interpenetrating polymer network 140 between the thermosetting resin and the thermoplastic resin.

Advantageously, when the above thermodynamic and solubility compatibility criteria have been met, the bonding process may typically take place without any alteration to the manufacturer's recommended curing cycle for the thermosetting polymer.

### Example

Two composite panels with a semi-crystalline polymer surface film were manufactured. In the first panel, a single layer of an acrylic fluoropolymer thermoplastic with a melting point of approximately 170 deg. C (250 m thickness) was located on a liner and vacuum formed to conform to the mould surface. Vacuum pressure on the liner was maintained to retain the surface film. A layer of ST95 SPRINT from SP Systems was located on the surface film. A layer of a preimpregnated woven fabric WE90 from SP Systems was located on the ST95 layer. The laminate was enclosed within a vacuum bag and the air within the vacuum bag was evacuated, and the laminate was cured at 90 deg. C for 120 minutes followed by a further high temperature dwell of 120 deg. C for 30 minutes. After curing the thermoplastic film was fully integrated with the composite laminate. A second panel was manufactured with a single layer of an acrylic fluoropolymer thermoplastic with a melting point of approximately 170°C (250µm thickness) and a weight of 100 g/m². The layer was located on a liner and vacuum formed to conform to the mould surface. Vacuum pressure on the liner was maintained to retain the surface film. Two dry fibrous fabric layers of 900g/m² fabric were applied on the surface film to form a laminate. The laminate was enclosed in a vacuum bag and infused with the Prime 20 Infusion System from SP Systems at room temperature and then cured at 85°C for 12 hours. After curing the thermoplastic film was fully integrated with the composite substrate.

Both test panels were subjected to various tests. Both panels showed excellent resistance to weathering when subjected to various tests such as ASTM G154 (UV radiation), ASTM E 313 (yellowing) with no signs of yellowing after 672 hours of UV exposure and no cracking of the surface material. Also, chemical resistance was good when subjected to ASTM D-543 testing.

The panels were also subjected to a shear stress test according to British Standard (BS) 5350 Part C5 and a flatwise stress test according to BS 5350 Part C6. In both cases, values of over 3 MPa were measured. The material also showed compliance with tensile strain adhesion test ASTM D3039 and the cross hatch test in accordance with EN ISO 2409 in which no surface material became detached. This indicated that the bond between the surface material and the thermosetting polymer composite was very strong indeed.

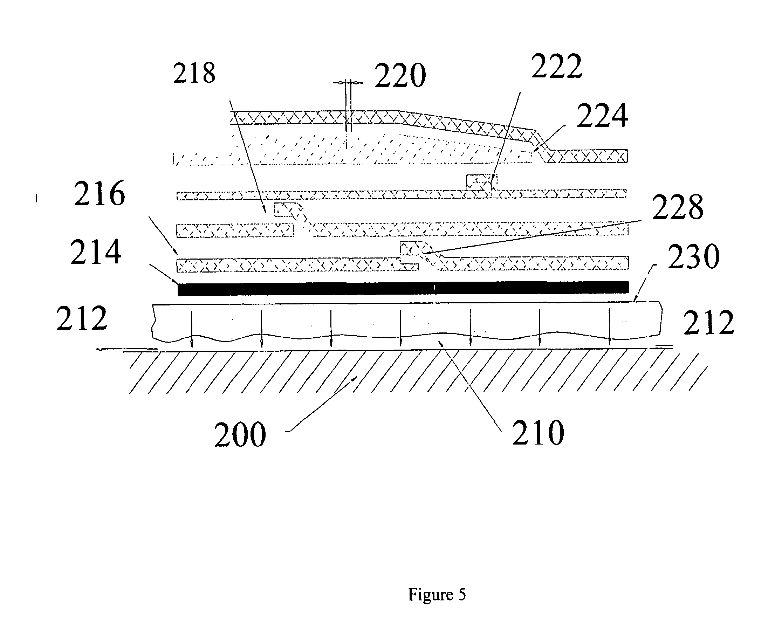

The manufacturing practices when fabricating large-size composite parts and the particular advantages are clarified with reference to Figure 5.

Large-size components such as wind turbine blades, marine structures etc., are generally not laminated with the same tailoring precision as smaller parts such as automotive and aerospace components. To save time and costs, each layer of reinforcing fibres tends to be thicker (typical weight of the reinforcing fabric is 450 g/m² or more). Core materials are even thicker and the joins between the materials are usually tapered. However, tapering is generally minimal. Usually, on machining an incomplete tapering is formed and a final (typically 5 mm) straight edge is left. The edges are prone to damage during handling leaving sharp hard points. To avoid the need to thermoform the core material to the mould shape, cuts are made in the core material to increase the flexibility of the material and to conform the material to the mould curvature. These "faults" cause notable "hard" and "soft" spots and point where the fibres bridge over each other or move into the core gaps.

This is illustrated in Figure 5. The mould 200 has an air permeable liner 210 which is provided on the mould 200 surface. The laminate comprises a surface film 214 which is vacuum formed on the surface 230 of the liner 210 by extraction of air 212 from in between the liner surface 230 and the thermoplastic surface film 214.

A laminate is located on the surface film 214. This laminate comprises various layers of a reinforcement material 216,218,222 and a core material 224. The first reinforcement layer 216 is largely unimpregnated to provide an air permeable layer. This layer ensures adequate bonding between the surface material 214 and the structural materials of the laminate.

The reinforcement layer 216 comprises a reduced thickness fabric edge which provides a "soft overlap" 228. The resin preimpregnated reinforcement layer 218 comprises a "standard overlap" whereby layers of the reinforcement layer simply overlap. This is common practice in the manufacture of large composite parts. The subsequent resin preimpregnated layer comprises fabric folds 222 which form defects in the material or lay-up errors. The core material 224 has a 5 mm typical core sharp edge and the material 224 also comprises a core gap 220.

If the laminate as shown in Figure 5 is processed on a conventional vacuum forming tool, then the various features 228,218,222,224,220 cause defects in the surface finish of the moulded article which either result in the aforesaid hard spots or soft spots.

However, the liner provides even through thickness breathability across the entire surface 214 of the liner. This holds the surface film material against the liner surface and prevents the tendency of the surface film to move into the fabric and core geometry by maintaining sufficient resin content and flow control these cavities are filled with resin while the surface film is held against the liner. The resin rheology or flow properties of the resin during processing are selected to ensure that defects and cavities created by the core and fabric overlaps fill with resin during processing. This prevents the print through of the various overlaps, joining and manufacturing faults of the laminate which are typically present in an industrial component.

As shown in Figure 5, the first ply or reinforcement layer 216 next to the thermoplastic film is an air permeable layer to prevent voids between the thermoplastic film and the laminate.

In use, the liner 210 is applied to a conventional mould 200 in a similar manner as herein before described with reference to Figures 2 and 3. The surface material 214 is vacuum formed by extraction of air 212 and it is held in place on the liner surface 230 by continued extraction of air. Subsequent reinforcement layers 216,218, 222 and a core material 224 are provided on the surface material 214. The lay up is then consolidated and processed in a conventional manner for example by vacuum bagging.

The moulding method, mould and liner as herein described are thus suitable for use in conventional moulds of any kind to adapt these moulds to vacuum forming. The method and liner are particularly suited to moulding large-size composite articles comprising a thermoplastic surface layer and one or more thermoset structural reinforcement layers. Other composite articles and smaller size composite articles may also be fabricated. The method and liner as herein described enable moulding of articles with a thermoplastic surface coating wherein surface defects are minimised or absent and the overall production time for producing these articles is significantly reduced and whereby the bond between the surface material and the structural material is significantly improved.

The liner also enables a damaged mould, which has lost some vacuum integrity and is therefore not completely air impervious, to be used for vacuum assisted moulding. The air that would have leaked through the original mould or tool to the laminate is re-routed out of the mould and away from the surface/laminate by the vacuum and air flow between the liner and the mould. The liner thus advantageously allows air impervious or damaged and now air permeable mould surfaces to be used. This advantageously prolongs the useful life of moulds or tools.

A thermoplastic functional surface material having a semi-crystalline or crystalline polymer surface intimately bonded to a thermosetting polymer composite component also provides additional distinct advantages such as improved chemical resistance, reduced water uptake, improved wear and erosion resistance, improved bonding between similar materials, improved surface appearance, improved frictional properties, improved surface electrical properties, improved fire resistance or reduced smoke generation due to fire, improved UV resistance, improved surface cracking resistance, improved biocompatibility, improved ability to be sterilised and improved scratch and dent resistance.

## Claims

1. A method of fabricating a moulded product comprising:
a) locating a thermoplastic surface material (32) in relation to a mould (34), comprising a closed, air impervious first mould surface for shaping the surface material, the thermoplastic surface material (32) being provided with a textured surface in relation to the first mould surface which provides an air extraction path between the first mould surface and the thermoplastic surface material (32),
b) heating the surface material (32) to a temperature sufficient to conform the surface material to the mould (34),
c) drawing an in-mould vacuum pressure to conform the surface material (32) to the mould (34) by applying the vacuum pressure to the extraction path,
d) locating a structural material (36) in relation to the surface material (32) in a moulding relationship to bond the structural material (36) with the surface material (32) to form a laminate, and
e) processing the laminate to form the moulded product.

2. The method as claimed in Claim 1 wherein said method further includes the steps of forming the textured surface on the thermoplastic film (32) by drawing said film into a mould (34) which is provided with a textured sheet.

3. The method as claimed in claim 1 or claim 2 wherein the textured surface is embossed.

4. The method as claimed in any of claims 1 to 3 wherein in step a) the surface material (32) is sealed to a perimeter of the mould.

5. The method as claimed in any forgoing claim wherein the texture of the textured surface is removed during processing step e) so that the texture is absent in the moulded product.

6. A method according to any foregoing claim wherein in locating step (d) the structural material is located in relation to the surface material (32) after applying the vacuum pressure to the extraction path.

7. A method according to any forgoing claim wherein the structural material (36) comprises at least one layer of a fibrous reinforcement material, the fibrous reinforcement layer being at least partially unimpregnated with resin to allow entrapped air to pass out of the structural material (36) during processing of the laminate, and
in locating step (d) the structural material (36) is located in relation to the surface material (32) such that the at least partially unimpregnated fibrous reinforcement layer is in contact with the surface material (32).

8. A method according to claim 7, wherein the structural material (36) comprises a fibrous reinforcement material and a reinforcement resin material.

9. A method according to any of the preceding claims, wherein the processing step (e) comprises infusing the structural material (36) with a reinforcement resin.

10. A method according to any foregoing claim, wherein
the surface material (32) comprises a semi-crystalline or crystalline thermoplastic material, the structural material (36) comprises a thermosetting polymer component, the semi-crystalline thermoplastic polymer and uncured thermosetting polymer components being selected so as to be compatible, locating, in step (d), the uncured thermosetting polymer component in contact with the thermoplastic polymer,
and during processing of the laminate in step (e) heating the thermoplastic polymer of the surface material (32) and uncured thermosetting polymer composite component of the structural material (36) to the curing temperature of the thermosetting polymer, where the uncured thermosetting polymer components and the thermoplastic polymer are able to at least partially interpenetrate before the thermosetting polymer cures; and cooling the thermoplastic polymer and cured thermosetting polymer component such that the thermoplastic polymer is very strongly bonded to the cured thermosetting polymer component.

11. A method according to claim 10, wherein the curing temperature of the uncured thermosetting polymer component is above the melting temperature of the semi-crystalline thermoplastic polymer.

12. A method according to claim 10, wherein in the processing step (e) the uncured thermosetting polymer components migrate into the thermoplastic polymer at or below the curing temperature of the thermosetting component.

## Patentansprüche

1. Verfahren zum Herstellen eines geformten Erzeugnisses, umfassend:
a) Anordnen eines thermoplastischen Oberflächenmaterials (32) in Bezug auf eine Form (34), die eine geschlossene, luftdichte erste Formoberfläche zum Formen des Oberflächenmaterials umfasst, wobei das thermoplastische Oberflächenmaterial (32) in Bezug auf die erste Formoberfläche mit einer strukturierten Oberfläche versehen ist, wodurch ein Luftextraktionspfad zwischen der ersten Formoberfläche und dem thermoplastischen Oberflächenmaterial (32) vorgesehen wird,
b) Erwärmen des Oberflächenmaterials (32) auf eine Temperatur, die ausreicht, um das Oberflächenmaterial an die Form (34) anzupassen,
c) Ziehen eines Vakuumdruckes in der Form, um das Oberflächenmaterial (32) an die Form (34) durch Anlegen des Vakuumdruckes an den Extraktionspfad anzupassen,
d) Anordnen eines Strukturwerkstoffs (36) in Bezug auf das Oberflächenmaterial (32) in einer Formgebungsbeziehung, um den Strukturwerkstoff (36) mit dem Oberflächenmaterial (32) zu verbinden und so ein Laminat auszubilden, und
e) Verarbeiten des Laminats, um das geformte Erzeugnis auszubilden.

2. Verfahren nach Anspruch 1, wobei das genannte Verfahren ferner die Schritte des Ausbildens der strukturierten Oberfläche auf der thermoplastischen Folie (32) durch Ziehen der genannten Folie in eine Form (34) umfasst, die mit einer strukturierten Platte versehen ist.

3. Verfahren nach Anspruch 1 oder Anspruch 2, wobei die strukturierte Oberfläche geprägt ist.

4. Verfahren nach einem der Ansprüche 1 bis 3, wobei im Schritt a) das Oberflächenmaterial (32) mit einem Umfang der Form abgedichtet wird.

5. Verfahren nach einem der vorhergehenden Ansprüche, wobei die Struktur der strukturierten Oberfläche während des Verarbeitungsschrittes e) entfernt wird, so dass die Struktur in dem geformten Erzeugnis fehlt.

6. Verfahren nach einem der vorhergehenden Ansprüche, wobei in dem Anordnungsschritt (d) der Strukturwerkstoff in Bezug auf das Oberflächenmaterial (32) angeordnet wird, nachdem der Vakuumdruck an dem Extraktionspfad angelegt wurde.

7. Verfahren nach einem der vorhergehenden Ansprüche, wobei der Strukturwerkstoff (36) mindestens eine Schicht aus einem Verstärkungsmaterial aus Faserstoff umfasst, wobei die Verstärkungsschicht aus Faserstoff zumindest teilweise nicht mit Harz imprägniert ist, um zu ermöglichen, dass eingeschlossene Luft während des Verarbeitens des Laminats aus dem Strukturwerkstoff (36) austritt, und
in dem Anordnungsschritt (d) der Strukturwerkstoff (36) in Bezug auf das Oberflächenmaterial (32) derart angeordnet wird, dass die zumindest teilweise nicht imprägnierte Verstärkungsschicht aus Faserstoff mit dem Oberflächenmaterial (32) in Kontakt steht.

8. Verfahren nach Anspruch 7, wobei der Strukturwerkstoff (36) ein Verstärkungsmaterial aus Faserstoff und ein Verstärkungsmaterial aus Harz umfasst.

9. Verfahren nach einem der vorhergehenden Ansprüche, wobei der Verarbeitungsschritt (e) das Infundieren des Strukturwerkstoffes (36) mit einem Verstärkungsharz umfasst.

10. Verfahren nach einem der vorhergehenden Ansprüche, wobei das Oberflächenmaterial (32) ein semikristallines oder kristallines thermoplastisches Material umfasst, wobei der Strukturwerkstoff (36) eine duroplastische Polymerkomponente umfasst, wobei das semikristalline thermoplastische Polymer und die ungehärteten duroplastischen Polymerkomponenten so ausgewählt werden, dass sie kompatibel sind, wobei im Schritt (d) die ungehärtete duroplastische Polymerkomponente in Kontakt mit dem thermoplastischen Polymer angeordnet wird,
und wobei während des Verarbeitens des Laminats im Schritt (e) das thermoplastische Polymer des Oberflächenmaterials (32) und die ungehärtete duroplastische Polymerverbundkomponente des Strukturwerkstoffs (36) auf die Aushärtungstemperatur des duroplastischen Polymers erwärmt werden, bei der die ungehärteten duroplastischen Polymerkomponenten und das thermoplastische Polymer fähig sind, zumindest teilweise ineinander einzudringen, ehe das duroplastische Polymer aushärtet, und wobei das thermoplastische Polymer und die ausgehärtete duroplastische Polymerkomponente derart gekühlt werden, dass das thermoplastische Polymer sehr stark mit der ausgehärteten duroplastischen Polymerkomponente verbunden wird.

11. Verfahren nach Anspruch 10, wobei die Aushärtungstemperatur der ungehärteten duroplastischen Polymerkomponente über der Schmelztemperatur des semikristallinen thermoplastischen Polymers liegt.

12. Verfahren nach Anspruch 10, wobei in dem Verarbeitungsschritt (e) die ungehärteten duroplastischen Polymerkomponenten bei oder unter der Aushärtungstemperatur der duroplastischen Komponente in das thermoplastische Polymer wandern.

## Revendications

1. Procédé de fabrication d'un produit moulé, comprenant :
a) le placement d'un matériau thermoplastique de surface (32) par rapport à un moule (34) comprenant une première surface de moule fermée et imperméable à l'air pour mettre en forme le matériau de surface, le matériau thermoplastique de surface (32) étant pourvu d'une surface texturée par rapport à la première surface de moule qui fournit un passage d'extraction d'air entre la première surface de moule et le matériau thermoplastique de surface (32),
b) le chauffage du matériau de surface (32) à une température suffisante pour que le matériau de surface s'ajuste au moule (34),
c) la formation d'une dépression par aspiration à l'intérieur du moule pour que le matériau de surface (32) s'ajuste au moule (34) par l'application de la dépression au passage d'extraction,
d) le placement d'un matériau de structure (36) par rapport au matériau de surface (32) en relation de moulage pour lier le matériau de structure (36) au matériau de surface (32) de manière à former un stratifié, et
e) le traitement du stratifié pour former le produit moulé.

2. Procédé selon la revendication 1, dans lequel ledit procédé comprend en outre les étapes de formation de la surface texturée sur le film thermoplastique (32) par la mise en forme dudit film dans un moule (34) qui est pourvu d'une feuille texturée.

3. Procédé selon la revendication 1 ou la revendication 2, dans lequel la surface texturée est bosselée.

4. Procédé selon l'une quelconque des revendications 1 à 3, dans lequel, dans l'étape a), le matériau de surface (32) est scellé sur un périmètre du moule.

5. Procédé selon l'une quelconque des revendications précédentes, dans lequel la texture de la surface texturée est éliminée lors de l'étape e) de traitement, de sorte que la texture est absente dans le produit moulé.

6. Procédé selon l'une quelconque des revendications précédentes, dans lequel, dans l'étape (d) de placement, le matériau de structure est placé par rapport au matériau de surface (32) après l'application de la dépression au passage d'extraction.

7. Procédé selon l'une quelconque des revendications précédentes, dans lequel le matériau de structure (36) comprend au moins une couche de matériau fibreux de renforcement, la couche fibreuse de renforcement étant au moins partiellement imprégnée avec une résine pour permettre à l'air piégé de traverser le matériau de structure (36) lors du traitement du stratifié, et
dans l'étape (d) de placement, le matériau de structure (36) est placé par rapport au matériau de surface (32) de manière à ce que la couche fibreuse de renforcement au moins partiellement imprégnée soit en contact avec le matériau de surface (32).

8. Procédé selon la revendication 7, dans lequel le matériau de structure (36) comprend un matériau fibreux de renforcement et un matériau résineux de renforcement.

9. Procédé selon l'une quelconque des revendications précédentes, dans lequel l'étape e) de traitement comprend la perfusion du matériau de structure (36) avec une résine de renforcement.

10. Procédé selon l'une quelconque des revendications précédentes, dans lequel
le matériau de surface (32) comprend un matériau thermoplastique semi-cristallin ou cristallin et le matériau de structure (36) comprend un composant polymère thermodurcissable, le polymère thermoplastique semi-cristallin et les composants polymères thermodurcissables non durcis étant choisis de manière à être compatibles, et dans l'étape (d), le composant polymère thermodurcissable non durci est placé en contact avec le polymère thermoplastique,
et lors du traitement du stratifié dans l'étape (e), le polymère thermoplastique du matériau de surface (32) et le composant polymère composite thermodurcissable non durci du matériau de structure (36) sont chauffés à la température de durcissement du polymère thermodurcissable, les composants polymères thermodurcissables non durcis et le polymère thermoplastique étant capables de s'interpénétrer au moins partiellement avant le durcissement du polymère thermodurcissable ; et le polymère thermoplastique et le composant polymère thermodurcissable durci sont refroidis, de sorte que le polymère thermoplastique est fortement lié au composant polymère thermodurcissable durci.

11. Procédé selon la revendication 10, dans lequel la température de durcissement du composant polymère thermodurcissable non durci est supérieure à la température de fusion du polymère thermoplastique semi-cristallin.

12. Procédé selon la revendication 10, dans lequel, dans l'étape (e) de traitement, les composants polymères thermodurcissables non durcis migrent dans le polymère thermoplastique à la température de durcissement ou en dessous de la température de durcissement du composant thermodurcissable.
